# EUROPÄISCHE PATENTSCHRIFT

(11) **EP 3 670 299 B1**
(45) Veröffentlichungstag und Bekanntmachung des Hinweises auf die Patenterteilung: **11.08.2021**
(21) Anmeldenummer: 19214489.7
(22) Anmeldetag: 09.12.2019
(51) Int. Cl.: B62D 9/02, B60K 5/10

(54) **MEHRSPURFAHRZEUG**
MULTI-LANE VEHICLE
VÉHICULE MULTIVOIE

(30) Priorität: 18.12.2018 DE 102018132596
(43) Veröffentlichungstag der Anmeldung: 24.06.2020
(73) Patentinhaber: Modell- und Formenbau Blasius Gerg GmbH, 83104 Hohenthann (DE)
(72) Erfinder: BLÜMEL, Matthias, 83730 Fischbachau (DE)
(74) Vertreter: Horn Kleimann Waitzhofer Patentanwälte PartG mbB

(56) Entgegenhaltungen:
- WO-A1-2013/005007
- US-A1- 2006 255 550
- US-A1- 2008 197 597
- US-A1- 2011 006 498
- US-A1- 2014 172 286

## Beschreibung

Die vorliegende Erfindung betrifft ein Mehrspurfahrzeug.

Das Straßenbild in Metropolen wird sich radikal ändern müssen, um dem steigenden Verkehrsaufkommen gerecht werden zu können. Schon bald werden sich dort vollkommen neue Mobilitätskonzepte etablieren. Allen gemein wird das Streben nach einem möglichst geringen Flächenbedarf und einer größtmöglichen Energieeffizienz sein. In der Folge müssen Fahrzeuge auch in ihrer Breite schrumpfen.

Reduziert sich die Fahrzeugbreite, ist es ab einem von der Höhe des Fahrzeugschwerpunkts und der Geschwindigkeit abhängigen Maß notwendig, dass sich das Fahrzeug, wie ein einspuriges Fahrzeug in die Kurve neigt, um nicht umzukippen. Hierzu sind diverse technische Lösungen bekannt. Diese unterscheiden sich grundsätzlich in Bezug darauf, ob sich das Fahrzeug aktiv in die Kurve neigt, oder ob es, wie ein Einspurfahrzeug, durch eine Lenkbewegung entgegen der eigentlichen Kurvenrichtung vor Kurvenbeginn aufgrund seiner Massenträgheit in die Kurve fällt.

Aktiv neigende Systeme stellen deutlich geringere Anforderungen an den Fahrer. Sie sind jedoch fahrdynamisch unterlegen und benötigen komplexe mechanische Systeme, welche einen hohen Energieverbrauch aufweisen.

US 2014/0172286 A1 offenbart ein Mehrspurfahrzeug gemäß dem Oberbegriff des Anspruchs 1. WO 2013/005007 A1, US 2008/0197597 A1, WO 97/27071 A1 und US 2011/0006498 A1 offenbaren weitere Mehrspurfahrzeuge.

Aufgabe der vorliegenden Erfindung ist es daher, ein verbessertes Mehrspurfahrzeug anzugeben.

Diese Aufgabe wird gelöst durch ein Mehrspurfahrzeug, insbesondere Mikromobil, mit
einer Tragstruktur, welche sich in Fahrzeuglängsrichtung erstreckt,
einem ersten Rad, welches eine erste Fahrspur vorgibt,
einem zweiten Rad, welches eine zweite Fahrspur vorgibt, die in einer Fahrzeugbreitenrichtung von der ersten Fahrspur beabstandet ist,
einer ersten Schwinge, welche das erste Rad an der Tragstruktur schwenkbar anlenkt,
einer zweiten Schwinge, welche das zweite Rad an der Tragstruktur schwenkbar anlenkt,
einem Hebel, welcher an der Tragstruktur schwenkbar angelenkt ist und die erste und zweite Schwinge mechanisch koppelt, und
einem Aktor, welcher dazu eingerichtet ist, wahlweise:
   ein Drehmoment auf den Hebel aufzubringen, um dadurch die Tragstruktur um die Fahrzeuglängsrichtung zu neigen, oder
   eine Schwenkbewegung des Hebels um die Fahrzeuglängsrichtung freizugeben.

Ein Mehrspurfahrzeug mit den vorstehend beschriebenen Merkmalen vereint die Vorteile eines aktiv neigenden Systems mit denen eines Einspurfahrzeugs. Je nachdem, ob nun der Aktor ein Drehmoment auf den Hebel aufbringt oder diesen freigibt, wird ein aktiv neigendes System (Drehmoment wird aufgebracht - vorliegend auch als "Neigetechnik aktiv" bezeichnet) oder ein Verhalten wie beim Einspurfahrzeug (Schwenkbewegung ist freigegeben - vorliegend auch als "Neigetechnik passiv" bezeichnet) bereitgestellt.

Bei dem Mehrspurfahrzeug kann es sich insbesondere um ein Mikromobil handeln. Hierunter werden Fahrzeuge mit einem Gewicht kleiner 300 kg verstanden. Mikromobile werden insbesondere elektrisch oder durch Menschenkraft angetrieben. Dabei kann auch eine Kombination aus elektrischem Antrieb und Menschenkraft verwendet werden.

Das Mehrspurfahrzeug kann insbesondere drei- oder vierrädrig ausgebildet sein. Bei einer Ausführungsform mit drei Rädern können bevorzugt zwei Vorderräder und ein Hinterrad vorgesehen sein. Die zwei Vorderräder stabilisieren das Fahrzeug in der Kurvenfahrt. Die Ausführungsform mit vier Rädern umfasst bevorzugt zwei Vorderräder und zwei Hinterräder.

Die Tragstruktur trägt die Räder und den Fahrer bzw. einen entsprechenden Fahrersitz und gegebenenfalls Passagiere bzw. entsprechende ein oder mehrere Passagiersitze. Bevorzugt erstreckt sich die Tragstruktur in Fahrzeuglängsrichtung. Die Tragstruktur kann ein Dach aufweisen, welches zumindest den Fahrersitz überdacht. Das Dach kann Bestandteil eines Überrollkäfigs sein.

Die Tragstruktur kann aus ein oder mehreren Profilen gefertigt sein. Die Profile können durch Schweißen, Verschrauben oder auf sonstige Weise miteinander verbunden sein. Die Profile können aus Metall, insbesondere Stahl oder Aluminium, gefertigt sein. Darüber hinaus besteht die Möglichkeit, die Tragstruktur, zumindest in Teilen, aus einem Faserverbundwerkstoff herzustellen. Entsprechend kann die Tragstruktur zumindest einen Hohlkörper aufweisen, welcher aus Faserverbundwerkstoff hergestellt ist. Bei dem Faserverbundwerkstoff kann es sich beispielsweise um Kohlefaserkunststoff handeln. Bei der Herstellung der Tragstruktur aus Faserverbundwerkstoffe kommt insbesondere die Verbindungstechnik des Klebens in Betracht. Auch sonstige aus dem Leichtbau bekannte Techniken, insbesondere Verbindungstechniken, können zum Einsatz kommen.

Die Fahrzeuglängsrichtung ist gleichbedeutend mit der Fahrtrichtung. Die Fahrzeugbreitenrichtung ist vorliegend diejenige Richtung, welche in einer horizontalen Ebene angeordnet ist und quer zur Fahrzeuglängsrichtung weist.

Das erste und zweite Rad können in der Fahrzeugbreitenrichtung jeweils gegenüberliegend der Tragstruktur angeordnet sein. Mithin ergeben sich zumindest zwei getrennte Fahrspuren. Das Mehrspurfahrzeug kann aber auch drei, vier oder mehr Fahrspuren aufweisen.

Das erste und zweite Rad sind vorzugsweise mithilfe einer Lenkung des Mehrspurfahrzeugs lenkbar. Dazu können sie beispielsweise jeweils mit einem Lenkgestänge verbunden sein.

Bei dem ersten und zweiten Rad kann es sich bevorzugt um Vorderräder des Mehrspurfahrzeugs handeln. Das erste und zweite Rad können jeweils eine Felge und/oder einen Reifen aufweisen.

Die (erste und zweite) Schwingen sind bevorzugt jeweils um die Fahrzeuglängsrichtung schwenkbar an der Tragstruktur angelenkt. Es können pro Rad auch jeweils zwei Schwingen, also zwei erste und zwei zweite Schwingen, vorgesehen sein.

Darunter, dass der Hebel die erste und zweite Schwinge mechanisch koppelt, ist zu verstehen, dass dieser dazu eingerichtet ist, eine Kraft von der ersten auf die zweite Schwinge, und umgekehrt, zu übertragen. Auch der Hebel ist bevorzugt um eine Achse in Fahrzeuglängsrichtung schwenkbar an der Tragstruktur angelenkt.

Gemäß einer Ausführungsform ist der Hebel ein Kipphebel.

"Kipphebel" bedeutet vorliegend, dass der Hebel an seinem einen (insbesondere in vertikaler Richtung unteren) Ende schwenkbar an der Tragstruktur angelenkt ist. Die erste und zweite Schwinge stützen sich dagegen jeweils an dem anderen (insbesondere in vertikaler Richtung oberen) Ende (bzw. bogenförmigen Abschnitt) des Hebels ab, insbesondere mittels eines jeweiligen Feder-Dämpfer-Elements. Eine Schwenkbewegung der ersten oder zweiten Schwinge tendiert also dazu, den Hebel um sein eines Ende zu kippen.

Gemäß einer weiteren Ausführungsform weist das Mehrspurfahrzeug ferner ein Zahnrad auf, wobei der Hebel mit einem gezahnten Abschnitt versehen ist, der im Eingriff mit dem Zahnrad steht, und wobei der Aktor dazu eingerichtet ist, das Zahnrad anzutreiben.

Bevorzugt ist der Hebel kreissegmentförmig ausgebildet. Das Kreissegment kann beispielsweise einen Winkel zwischen 45° und 180°, bevorzugt zwischen 60° und 150° einschließen. Der gezahnte Abschnitt ist bevorzugt an der Umfangsseite des Kreissegments angeordnet. Die Anlenkung an der Tragstruktur erfolgt bevorzugt im Winkeleck des Kreissegments. Die Abstützung der ersten und zweiten Schwinge an dem Hebel kann bevorzugt angrenzend oder benachbart zu dem gezahnten Abschnitt vorgesehen sein. Beispielsweise können ein erster und ein zweiter Arm vorgesehen sein, welche von dem gezahnten Abschnitt radial nach außen abragen. Bevorzugt ist am radial äußeren Ende des ersten Arms die erste Schwinge (gegebenenfalls mittelbar bzw. indirekt, beispielsweise mittels eines Feder-Dämpfer-Elements) abgestützt, am radial äußeren Ende des zweiten Arms die zweite Schwinge (gegebenenfalls mittelbar bzw. indirekt, beispielsweise mittels eines Feder-Dämpfer-Elements) abgestützt. Das Zahnrad ist bevorzugt an einem Ende einer von dem Aktor angetriebenen Welle angeordnet bzw. mit dieser drehfest verbunden.

Gemäß einer weiteren Ausführungsform weist das Mehrspurfahrzeug ein erstes Feder-Dämpfer-Element, welches an der ersten Schwinge und an dem Hebel schwenkbar angelenkt ist, und ein zweites Feder-Dämpfer-Element auf, welches an der zweiten Schwinge und an dem Hebel schwenkbar angelenkt ist, wobei bevorzugt das erste und zweite Feder-Dämpfer-Element an dem Kipphebel in der Fahrzeugbreitenrichtung versetzt zueinander angelenkt sind.

Unter einem Feder-Dämpfer-Element wird vorliegend ein Element verstanden, welches sowohl als Feder als auch als Dämpfer wirkt. Beispielsweise kann das Feder-Dämpfer-Element eine Spiralfeder und einen darin geführten Dämpfer aufweisen. Der Dämpfer kann ein Luft- oder Hydraulikdämpfer sein.

Gemäß einer weiteren Ausführungsform weist das Mehrspurfahrzeug eine erste Steuereinrichtung auf, welche dazu eingerichtet ist, den Aktor zum Aufbringen des Drehmoments und zum Freigeben der Schwenkbewegung anzusteuern.

Beispielsweise kann das Mehrspurfahrzeug ein Steuergerät mit zumindest einem Mikroprozessor aufweisen. Das Steuergerät steuert beispielsweise den elektrischen Antrieb des Mehrpurfahrzeugs. Zusätzlich oder alternativ kann das Steuergerät mit einer Benutzerschnittstelle verbunden sein. Bei der Benutzerschnittstelle kann es sich insbesondere um einen Bildschirm, Touchscreen, Schalter und/oder Drehwähler handeln. Über die Benutzerschnittstelle kann das Mehrpurfahrzeug Informationen an den Benutzer (insbesondere den Fahrer) ausgeben (in diesem Fall fungiert die Benutzerschnittstelle als Ausgabeeinrichtung). Bei den Informationen kann es sich beispielsweise um die aktuelle Fahrgeschwindigkeit handeln. Weiterhin können Informationen darüber angezeigt werden, ob die Neigetechnik aktiv oder passiv geschaltet ist. Ferner kann vorgesehen sein, dass das Steuergerät die erste Steuereinrichtung aufweist, d. h., die erste Steuereinrichtung ist beispielsweise auf dem genannten Mikroprozessor des Steuergeräts ausgebildet. Die erste Steuereinrichtung kann über die Benutzerschnittstelle einstellbar vorgesehen sein (in diesem Fall fungiert die Benutzerschnittstelle als Eingabeeinrichtung). Entsprechend kann der Benutzer an der Benutzerschnittstelle einstellen (vorliegend auch als Nutzerbefehl bezeichnet), ob die Neigetechnik aktiv oder passiv geschaltet ist.

Gemäß einer weiteren Ausführungsform weist das Mehrpurfahrzeug ein oder mehrere Sensoren, welche dazu eingerichtet sind, einen Neigungswinkel des Mehrspurfahrzeugs um die Fahrzeuglängsrichtung, einen Lenkwinkel des ersten und/oder zweiten Rads, eine Geschwindigkeit und/oder eine Beschleunigung des Mehrspurfahrzeugs zu erfassen, wobei die erste Steuereinrichtung dazu eingerichtet ist, den Aktor in Abhängigkeit von der oder der jeweils erfassten Größe zum Aufbringen des Drehmoments und zum Freigeben der Schwenkbewegung anzusteuern.

Gemäß dieser Ausführungsform wird das Mehrpurfahrzeug je nach Fahrsituation mit aktiver oder passiver Neigetechnik betrieben. Bei den ein oder mehreren Sensoren kann es sich beispielsweise um Beschleunigungssensoren, optische Sensoren, kapazitive Sensoren, induktive Sensoren oder Kraftsensoren handeln.

Gemäß einer weiteren Ausführungsform weist das Mehrpurfahrzeug eine Eingabeeinrichtung zur Eingabe eines Nutzerbefehls auf, wobei die erste Steuereinrichtung dazu eingerichtet ist, den Aktor in Abhängigkeit des Nutzerbefehls zum Aufbringen des Drehmoments und zum Freigeben der Schwenkbewegung anzusteuern.

Gemäß dieser Ausführungsform kann der Benutzer nach seinem Wunsch einstellen, ob das Mehrpurfahrzeug mit aktiver oder passiver Neigetechnik betrieben werden soll.

Gemäß einer weiteren Ausführungsform ist die erste Steuereinrichtung dazu eingerichtet, einen kritischen Fahrzustand des Mehrspurfahrzeugs festzustellen und, wenn ein solcher festgestellt wird, den Aktor zum Aufbringen des Drehmoments auf den Hebel anzusteuern.

Vorteilhaft schaltet das Mehrpurfahrzeug automatisch auf aktive Neigetechnik um, wenn ein kritischer Fahrzustand erreicht wird. Unter einem kritischen Fahrzustand ist vorliegend ein solcher Zustand zu verstehen, bei dem das Mehrpurfahrzeug einen dynamisch unkontrollierbaren Zustand (beispielsweise Schleudern oder Umkippen) erreicht und/oder ein Unfall unmittelbar droht. Der kritische Fahrzustand kann beispielsweise in Form von kritischen Beschleunigungen auf einem der ersten Steuereinrichtung zugeordneten Speicher hinterlegt sein.

Gemäß einer weiteren Ausführungsform ist die erste Steuereinrichtung dazu eingerichtet, den kritischen Fahrzustand des Mehrspurfahrzeugs in Abhängigkeit von der oder den jeweils erfassten Größen festzustellen.

Gemäß einer weiteren Ausführungsform weist das Mehrpurfahrzeug eine Kupplung auf, welche dazu eingerichtet ist, in einem ersten Zustand derselben den Aktor mit dem Hebel drehfest zu koppeln und in einem zweiten Zustand derselben den Aktor von dem Hebel zu entkoppeln.

Der erste Zustand der Kupplung ist derjenige, in welchem die Neigetechnik aktiv ist (Drehmoment wird von dem Aktor auf den Hebel mittels der Kupplung übertragen). Der zweite Zustand der Kupplung ist derjenige, in welchem die Neigetechnik passiv ist (kein Drehmoment wird von dem Aktor auf den Hebel mittels der Kupplung übertragen).

Gemäß einer weiteren Ausführungsform weist das Mehrpurfahrzeug auf: eine Detektoreinrichtung, welcher dazu eingerichtet ist, einen Fehlerzustand der ersten Steuereinrichtung zu detektieren, und eine zweite Steuereinrichtung, welche dazu eingerichtet ist, die Kupplung von dem ersten in den zweiten Zustand zu schalten, wenn die Detektoreinrichtung den Fehlerzustand detektiert.

Die Detektoreinrichtung überwacht zusammen mit der zweiten Steuereinrichtung die korrekte Funktion der ersten Steuereinrichtung. Detektiert sie einen Fehlerzustand der ersten Steuereinrichtung, so wird das Mehrpurfahrzeug aus dem Zustand mit aktiver Neigetechnik (erster Zustand) in den Zustand mit passiver Neigetechnik (zweiter Zustand) geschaltet. Es wird somit eine mechanische Rückfallebene (passive Neigetechnik) bereitgestellt, wenn die elektrische Steuerung (erste Steuereinrichtung) ausfällt und damit die aktive Neigetechnik nicht mehr zuverlässig bereitgestellt werden kann. Man kann sagen, dass in Ausführungsformen ein zweiter Regelkreis (umfassend die zweite Steuereinrichtung) vorgesehen ist, welcher einen ersten Regelkreis (umfassend die erste Steuereinrichtung) überwacht. Dadurch können Sicherheitsvorschriften betreffend den Straßenverkehr besser erfüllt werden. Die Detektoreinrichtung kann beispielsweise mit ein oder mehreren Kanälen der ersten Steuereinrichtung verbunden sein und diese überwachen. Die erste und zweite Steuereinrichtung können auch softwaretechnisch ausgebildet sein (in diesem Fall als erstes und zweites Steuerprogramm bezeichnet). Auch die Detektoreinrichtung kann als Software ausgebildet sein (beispielsweise in Form eines Detektorprogramms). Das Detektorprogramm überwacht das erste Steuerprogramm.

Gemäß einer weiteren Ausführungsform weist das Mehrpurfahrzeug ein Getriebe auf, welches dazu eingerichtet ist, eine Bewegung des Aktors auf den Hebel zu übertragen, wobei die Kupplung dazu eingerichtet ist, in dem ersten Zustand ein Widerlager des Getriebes mit der Tragstruktur drehfest zu verbinden und in einem zweiten Zustand von dieser zu entkoppeln.

Das Getriebe ist vorzugsweise ein Planetengetriebe. Indem dem Getriebe sein Widerlager (anders gesagt sein Abstützpunkt für Drehmomente) genommen wird, kann dieses auch keine Drehmomente mehr von dem Aktor auf den Hebel übertragen, sodass von der aktiven auf die passive Neigetechnik umgeschaltet wird.

Gemäß einer weiteren Ausführungsform weist die Kupplung eine Bremsscheibe, welche mit dem Widerlager des Getriebes verbunden ist, und eine Bremse auf, welche mit der Tragstruktur verbunden ist, wobei die Bremse dazu eingerichtet ist, in dem ersten Zustand die Bremsscheibe festzuklemmen und in dem zweiten Zustand freizugeben.

Dadurch kann der erste und zweite Zustand auf konstruktionstechnisch einfache Weise bereitgestellt werden. Die Bremse kann beispielsweise Bremsbacken aufweisen. Zumindest eine der Bremsbacken ist vorzugsweise mithilfe einer Spindel in Richtung der anderen Bremsbacke aufschraubbar. Die Spindel wird beispielsweise von einem Elektromotor angetrieben.

Gemäß einer weiteren Ausführungsform ist das Widerlager durch ein Gehäuse des Getriebes gebildet.

Dies ist konstruktionstechnisch einfach möglich. Das Getriebe kann insgesamt drehbar (insbesondere auch sein Gehäuse) vorgesehen sein.

Gemäß einer weiteren Ausführungsform ist die Bremsscheibe mit dem Gehäuse drehfest verbunden.

Hierzu kann die Bremsscheibe beispielsweise mit dem Gehäuse verschraubt sein.

Gemäß einer weiteren Ausführungsform weist die Kupplung einen Arm auf, welcher an dem Getriebe drehbar gelagert ist, wobei bevorzugt der Arm die Bremse trägt.

Der Arm kann beispielsweise über Gleitlager an dem Getriebe drehbar gelagert sein.

Gemäß einer weiteren Ausführungsform ist die Bremse oder der Arm mithilfe einer oder mehrerer Kraftmessdosen mit der Tragstruktur verbunden, wobei bevorzugt die ein oder mehreren Kraftmessdosen dazu eingerichtet sind, ein von dem Getriebe in dem ersten Zustand der Kupplung übertragenes Drehmoment zu erfassen.

Dadurch wird ein kompaktes und konstruktionstechnisch einfach darzustellendes System zur Messung des für die aktive Neigetechnik eingesetzten Drehmoments geschaffen werden.

Gemäß einer weiteren Ausführungsform ist die erste Steuereinrichtung dazu eingerichtet, den Aktor in Abhängigkeit von dem erfassten Drehmoment (ggf. nebst weiterer sensorisch erfasster Größen) anzusteuern.

Indem das Drehmoment erfasst wird, kann beispielsweise einfach ein Ist-Drehmoment an der ersten Steuereinrichtung bereitgestellt werden. Die erste Steuereinrichtung kann dazu eingerichtet sein, das Ist-Drehmoment mit einem Soll-Drehmoment zu vergleichen und in Abhängigkeit von dem Vergleichsergebnis den Aktor ansteuern. Selbst verständlich kann die Ansteuerung des Aktors zusätzlich unter Einbeziehung der vorgenannten Größen, wie etwa einer Fahrzeuggeschwindigkeit, erfolgen.

Gemäß einer weiteren Ausführungsform ist der Aktor ein Elektromotor.

Der Elektromotor ist vorzugsweise als rotatorischer Antrieb ausgebildet. Beispielsweise kann der Elektromotor als Schrittmotor ausgebildet sein.

Gemäß einer weiteren Ausführungsform weist das Mehrpurfahrzeug ferner auf:
eine Eingabeeinrichtung zur Eingabe eines Nutzerbefehls,
eine Bremse, welche dazu eingerichtet ist, ein Verschwenken des Hebels zu blockieren oder freizugeben, und
eine dritte Steuereinrichtung, welche dazu eingerichtet ist, die Bremse zum Blockieren oder Freigeben des Hebels in Abhängigkeit eines Nutzerbefehls anzusteuern.

Mittels dieser Ausführungsform lässt sich beispielsweise einfach eine elektronische Handbremse bereitstellen. Der Nutzer kann also insbesondere bei stehendem Fahrzeug eine Eingabe (Nutzerbefehl) beispielsweise mittels einer Eingabeeinrichtung (bspw. ein Touchscreen oder ein Schalter) tätigen. Diese Eingabe hat zur Folge, dass die dritte Steuereinrichtung die Bremse zum Blockieren des Hebels ansteuert. Dies verhindert, dass das stehende bzw. abgestellte Fahrzeug umfällt. Möchte der Nutzer wieder losfahren, kann er über eine weitere Eingabe mithilfe der dritten Steuereinrichtung die Bremse zum Freigeben des Hebels ansteuern. Hiernach kann das Fahrzeug mit aktiver oder passiver Neigetechnik gefahren werden. Auch die dritte Steuereinrichtung kann als Hardware oder Software bereitgestellt sein. Ferner kann vorgesehen sein, dass die dritte Steuereinrichtung zusammen mit der ersten oder zweiten Steuereinrichtung auf einer gemeinsamen Hardware bereitgestellt wird. Insbesondere kann das vorgenannte Steuergerät, insbesondere auf dessen Mikroprozessor, die dritte Steuereinrichtung aufweisen.

Ganz allgemein kann das Mehrspurfahrzeug elektrisch und/oder durch Menschenkraft (Muskelkraft) angetrieben werden.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt in einer perspektivischen Ansicht von schräg vorne ein Mehrpurfahrzeug gemäß einer Ausführungsform;
Fig. 2 zeigt von schräg vorne und ausschnittsweise das Mehrpurfahrzeug aus Fig. 1 in einer Ansicht II, wobei der Blick auf unter einer Frontverkleidung angeordnete Komponenten freigegeben ist;
Fig. 3 zeigt eine Ansicht III aus Fig. 2, wobei gegenüber Fig. 2 weitere Komponenten nicht dargestellt sind;
Fig. 4 zeigt die Ansicht aus Fig. 3 in ähnliche Richtung, wobei jedoch eine Vielzahl von Komponenten, insbesondere ein Teil der Tragstruktur des Mehrpurfahrzeugs nicht dargestellt ist;
Fig. 5 zeigt eine Frontalansicht V aus Fig. 4;
Fig. 6 zeigt einen Schnitt VI-VI aus Fig. 5 in leicht perspektivische Darstellung; und
Fig. 7 zeigt ein Blockschaltbild einer Steuerung bzw. Regelung des Mehrpurfahrzeugs gemäß einer Ausführungsform.

In den Figuren sind gleiche oder funktionsgleiche Elemente mit denselben Bezugszeichen versehen worden, sofern nichts anderes angegeben ist.

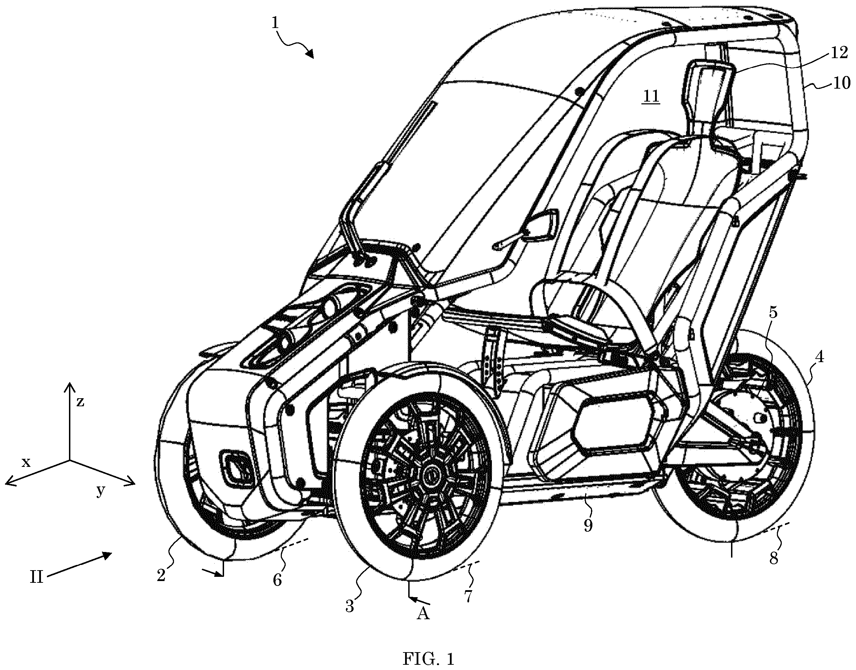

Fig. 1 zeigt in einer perspektivischen Ansicht von schräg vorne ein Mehrpurfahrzeug 1 gemäß einer Ausführungsform.

Das Mehrpurfahrzeug 1 ist beispielsweise als ein sogenanntes Mikromobil ausgeführt. Als solches weist es ein Fahrzeuggewicht von kleiner 300 kg, insbesondere zwischen 150 und 250 kg auf. Der Beweggrund für das niedrige Fahrzeuggewicht liegt darin, einen energiesparenden Betrieb zu ermöglichen. Entsprechend ist als Antrieb eine Kombination aus Pedalantrieb und elektrischem Antrieb (jeweils nicht im Detail gezeigt) vorgesehen. Der Pedalantrieb erfolgt über Beinmuskelkraft des Fahrers.

Als weiteres Merkmal der Mikromobilität ist das Mehrpurfahrzeug 1 dreirädrig mit zwei Vorderrädern 2, 3 und einem Hinterrad 4 ausgeführt. Dadurch kann der Rollwiderstand gegenüber einer vierrädrigen Ausführung reduziert werden. Gleichzeitig wird jedoch ein höheres Maß an Fahrzeugstabilität bzw. Fahrsicherheit erreicht, als dies bei einem zweirädrigen Fahrzeug der Fall ist. Gemäß dem Ausführungsbeispiel erfolgt an den Vorderrädern 2, 3 die Lenkung des Mehrpurfahrzeugs 1. Am Hinterrad 4 greift der Antrieb an. Beispielsweise ist ein elektrischer Radnabenmotor 5 am Hinterrad 4 vorgesehen. Insoweit sind selbstverständlich Varianten vorstellbar: Zusätzlich oder alternativ könnten die Vorderräder 2, 3 über elektrische Radnabenmotoren verfügen. Zusätzlich oder alternativ könnte das Hinterrad 4 über eine Lenkung verfügen.

Jedes der Räder 2, 3, 4 definiert eine Fahrspur 6, 7, 8, welche sich von den Fahrspuren der jeweils anderen Räder unterscheidet. So läuft beispielsweise die Fahrspur 8 des Hinterrads 4 mittig zwischen den beiden Fahrspuren 6, 7 der Vorderrädern 2, 3 hindurch. Entsprechend wird die maximale Spurweite des Mehrpurfahrzeugs 1 gemäß dem Ausführungsbeispiel durch den Abstand A zwischen den Fahrspuren 6, 7 definiert. Der Abstand A wird von der Mitte der Fahrspur 6 zur Mitte der Fahrspur 7 gemessen. Dieser beträgt beispielsweise weniger als 1,5 m, bevorzugt weniger als 1,2 m und noch weiter bevorzugt weniger als 1 m. Dadurch wird das Mehrpurfahrzeug 1 der urbanen Verdichtung gerecht, dies sowohl im Hinblick auf den fließenden Verkehr als auch in Bezug auf Parkmöglichkeiten.

Die Räder 2, 3, 4 sind auf an späterer Stelle detaillierte Weise an einer Tragstruktur 9 des Mehrpurfahrzeugs 1 gehalten. Die Tragstruktur 9 erstreckt sich in der Fahrzeuglängsrichtung x, welche gleichbedeutend mit der Fahrtrichtung ist. Die Tragstruktur 9 kann aus Stahl, Aluminium und/oder Faserverbundwerkstoff hergestellt sein. Gemäß dem Ausführungsbeispiel weist die Tragstruktur 9 einen Rahmen 10 aus Hohlprofilen auf. Der Rahmen 10 definiert eine lediglich seitlich, also in Fahrzeugbreitenrichtung y, offene und im Übrigen geschlossene Fahrgastzelle 11. Die Fahrgastzelle 11 umfasst einen einzigen Sitz, nämlich den Fahrersitz 12.

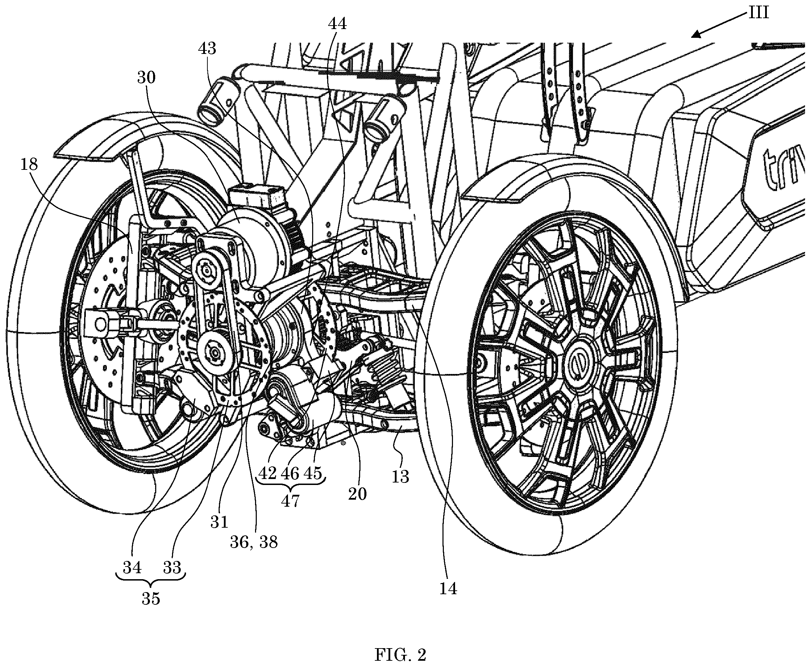

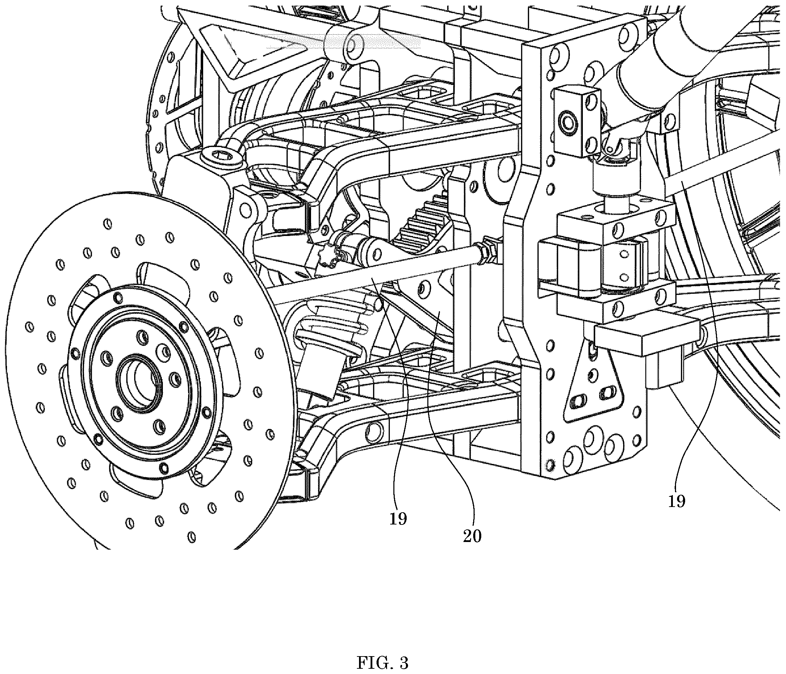

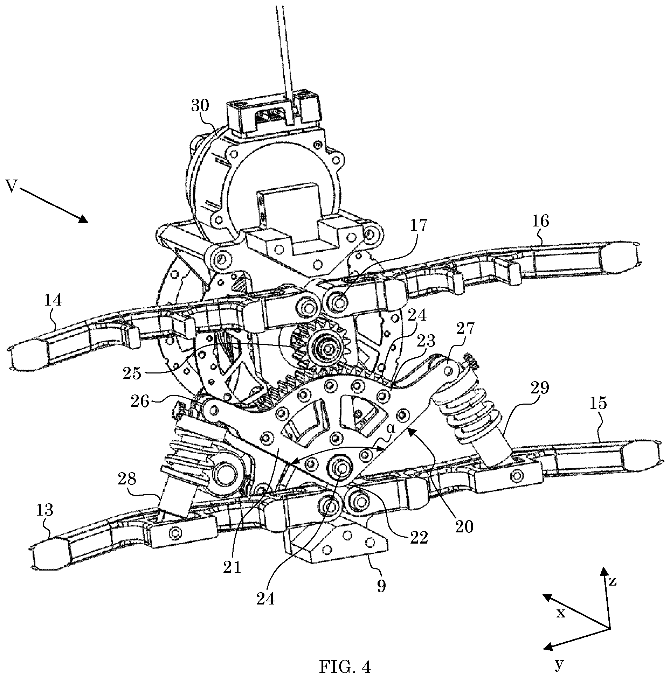

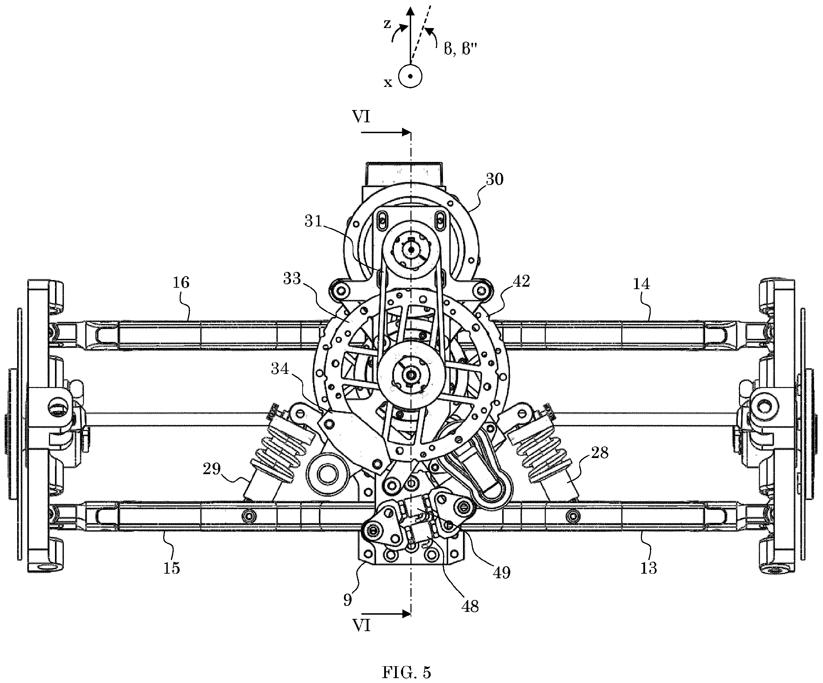

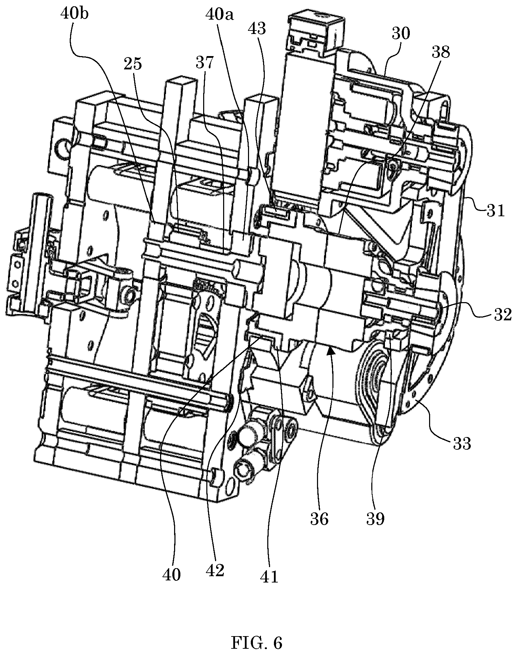

Die nachfolgenden Erläuterungen nehmen auf sämtliche der Fig. 2 - 7 Bezug. Fig. 2 zeigt eine Ansicht II aus Fig. 1, wobei Teile einer Frontverkleidung abgenommen dargestellt sind, um den Blick auf darunterliegende Komponenten freizugeben. Fig. 3 zeigt eine Ansicht III aus Fig. 2. Fig. 4 zeigt die Ansicht aus Fig. 3, wobei jedoch weitere Komponenten der besseren Übersichtlichkeit halber nicht dargestellt sind. Fig. 5 zeigt eine Ansicht V aus Fig. 4. Fig. 6 zeigt einen Schnitt VI-VI aus Fig. 5.

Aus der Zusammenschau der Fig. 2 und 4 wird deutlich, dass jedes der Räder 2, 3 mittels einer unteren und oberen Schwinge 13, 14 bzw. 15, 16 an der Tragstruktur 9 schwenkbar angelenkt ist. Hierzu können tragstrukturseitig Lager-BolzenVerbindungen verwendet werden. Eine solche Verbindung ist beispielhaft in Fig. 4 mit 17 bezeichnet.

Jeweils radseitig sind die Schwingen 13, 14 bzw. 15, 16 an einem Achsschenkel angelenkt. Ein solcher Achsschenkel ist beispielsweise in Fig. 2 zu sehen und dort mit 18 bezeichnet. An einem jeweiligen Achsschenkel sind die Vorderräder 2, 3 drehbar um die Fahrzeugbreitenrichtung y (in horizontaler Ebene und senkrecht zur Fahrzeuglängsrichtung x) gelagert.

In den Fig. 3 und 5 ist ferner ein Lenkgestänge 19 zu erkennen, mit dessen Hilfe die Vorderräder 2, 3 gelenkt werden können. Das Lenkgestänge 19 greift an den Achsschenkeln an.

Wie in den Fig. 2, 3 und 4 ersichtlich, ist an der Tragstruktur 9 ein Kipphebel 20 angelenkt. Der Kipphebel 20 weist eine kreissegmentförmige Grundform 21 mit einem Winkeleck 22 und einer diesem gegenüberliegenden Bogenform 23 auf. Das Winkeleck 22 schließt einen Winkel α von beispielsweise 120° ein. Der Kipphebel 20 ist an seinem Winkeleck 22 mithilfe einer Lager-Bolzen-Verbindung 24 um die Fahrzeuglängsrichtung x schwenkbar gelagert. Die Bogenform 23 weist einen gezahnter Abschnitt 24 auf. Dieser steht im Eingriff mit einem Zahnrad 25. Benachbart zu dem gezahnten Abschnitt 24 ist beidseits jeweils ein Arm 26, 27 an der Grundform 21 angeformt. An jedem Arm 26, 27 ist ein jeweiliges Feder-Dämpfer-Element 28, 29 an seinem einen Ende angelenkt. Die Anlenkpunkte der Feder-Dämpfer-Elemente 28, 29 an den Armen 26, 27 sind dabei in der Fahrzeugbreitenrichtung y zueinander versetzt bzw. voneinander beabstandet. An seinem jeweils anderen Ende ist ein jeweiliges Feder-Dämpfer-Element 28, 29 an der unteren Schwinge 13 bzw. 15 angelenkt.

Der Kipphebel 20, welcher vorliegend auch als Rocker bezeichnet werden kann, koppelt demnach mithilfe der Feder-Dämpfer-Elemente 28, 29 die beiden unteren Schwingen 13, 15 und damit eine vertikale Radbewegung, also in der Hochrichtung z, mechanisch. Dies ist auch in Fig. 5 ersichtlich.

Zurückkehrend zu Fig. 4, ist das dort gezeigte Zahnrad 25 mithilfe eines Aktors und weiterer nachfolgend näher beschriebene Mittel um die Fahrzeuglängsrichtung x drehbar. Die Drehung des Zahnrad 25 und das damit verbundene Verschwenken des Kipphebels 20 führen wegen der vorstehend beschriebenen mechanischen Kopplung zu einem Neigen der Tragstruktur 9 samt der Fahrgastzelle 11 (siehe Fig. 1) um die Fahrzeuglängsrichtung x. Dadurch wird eine aktive Neigetechnik bereitgestellt. Im Falle der aktiven Neigetechnik kann das Mehrpurfahrzeug 1 selbst, d. h. automatisiert oder zumindest den Fahrer unterstützend, eine Gewichtsverlagerung (durch Neigen der Tragstruktur 9) zur oder in der Kurvenfahrt herbeiführen. Andererseits wird dann, wenn der Aktor kein Drehmoment auf das Zahnrad 25 bzw. den Kipphebel 20 aufbringt, diese also freidrehend vorgesehen sind, eine passive Neigetechnik bereitgestellt. Im Fall der passive Neigetechnik muss der Fahrer selbst für eine geeignete Gewichtsverlagerung (durch Neigen der Tragstruktur 9) zur oder in der Kurvenfahrt sorgen.

Als Aktor zum Antreiben des Zahnrad 25 ist gemäß dem Ausführungsbeispiel, wie in den Fig. 2 und 6 ersichtlich, ein Elektromotor 30 vorgesehen. Der Elektromotor 30 treibt beispielsweise mittels eines Riemenantriebs 31 eine Welle 32 an. Auf der Welle 32 sitzt drehfest eine Bremsscheibe 33. Die Bremsscheibe 33 ist mithilfe eines Bremssattels 34 feststellbar vorgesehen. Der Bremssattel 34 hat sein Widerlager an der Tragstruktur 9, ist mit dieser also fest verbunden. Der Bremssattel 34 weist Bremsbeläge (nicht gezeigt) auf, welche mithilfe eines Elektromotors (nicht gezeigt) auf die Bremsscheibe 33 aufschraubbar sind. Die Bremsscheibe 33 und der Bremssattel 34 bilden eine elektrische Handbremse 35 aus, wie nachfolgend noch näher erläutert wird.

Die Welle 32 treibt Zahnräder (nicht gezeigt) im Inneren eines in Fig. 6 ersichtlichen Planetengetriebes 36 an. Abtriebsseitig ist das Planetengetriebe 36 mit einer Welle 37 verbunden. Auf der Welle 37 sitzt das Zahnrad 25 drehfest.

Das Gehäuse 38 des Planetengetriebes 36 ist an der Tragstruktur 9 um die Fahrzeuglängsrichtung x drehbar gelagert. Dies ist bevorzugt antriebsseitig mithilfe eines Lagers 39 und abtriebsseitig mithilfe eines Lagers 40 vorgesehen.

Gemäß dem Ausführungsbeispiel ist das Lager 39 als Rollenlager ausgebildet.

Das Lager 40 ist insbesondere als Gleitlager ausgebildet. Beispielsweise umfasst das Lager 40 einen Ring 41 mit einem z-förmigen Querschnitt. Der Ring 41 ist einerseits drehfest an dem Gehäuse 38 des Planetengetriebe 36 angeflanscht. Andererseits ist er drehfest mit einer Bremsscheibe 42 verbunden. Der Ring 41 gleitet in einem Ring 43, welcher einteilig oder einstückig mit einem in Fig. 2 zu erkennenden Arm 44 gebildet ist. An dem freien Ende des Arms 44 ist ein Bremssattel 45 fest angebracht. Der Bremssattel 45 weist Bremsbeläge (nicht gezeigt) auf, welche mithilfe eines Elektromotors 46 auf die Bremsscheibe 42 aufschraubbar sind. Die Bremsscheibe 42 und der Bremssattel 45 bilden eine elektrisch betätigte Kupplung 47 aus, wie nachfolgend noch näher erläutert wird. Außerdem ist, wie in Fig. 5 gezeigt, das freie Ende des Arms 44 mittels zweier Kraftmessdosen 48, 49 mit der Tragstruktur 9 fest verbunden. Entsprechend kann sich der Ring 43 (siehe Fig. 6) nicht um die Fahrzeuglängsrichtung x frei drehen. Das Lager 40 nimmt bevorzugt (im Wesentlichen) weder radiale noch axiale Kräfte auf, um eine möglichst gute Messung mithilfe der Kraftmessdosen 48, 49 zu ermöglichen.

Weiter sind Lager 40a, 40b vorgesehen, welche insbesondere als Rollenlager ausgebildet sind. Sie sind jeweils beispielweise in nicht näher bezeichneten Trennwänden der Tragstruktur 9 fixiert. Mithilfe der Lager 40a, 40b wird die Welle 37 drehbar gegenüber der Tragstruktur 9 gehalten. Außerdem stützen die Lager 40a, 40b das Planetengetriebe 36 radial ab. Dies erfolgt mittelbar durch die Kopplung des Planetengetriebes 36 mit der Welle 37.

Ist die Kupplung 47 festgestellt (vorliegend auch als erster Zustand der Kupplung 47 bezeichnet), d. h. der Bremssattel 45 fixiert die Bremsscheibe 42, kann sich das Gehäuse 38 des Planetengetriebes 36 nicht drehen, weil es selbst mittels des Rings 41 drehfest mit der Bremsscheibe 42 verbunden und ein Drehen des Bremssattels 45 wiederum aufgrund seiner Festlegung mittels des Arms 44 und der Kraftmessdosen 48, 49 an der Tragstruktur 9 verhindert ist. Entsprechend bildet in diesem Fall das Gehäuse 38 ein Widerlager des Planetengetriebes 36, sodass ein Drehmoment, welches mithilfe der Welle 32 antriebsseitig in das Planetengetriebe 36 eingekoppelt auch an der Ausgangsseite auf die Welle 36 und damit das Zahnrad 25 übertragen wird. Dieses Drehmoment muss gleichzeitig mithilfe der Kraftmessdosen 48, 49 an der Tragstruktur 9 abgestützt werden, sodass diese auf einfache Weise das jeweils mithilfe des Planetengetriebes 36 von dem Elektromotor 30 auf das Zahnrad 25 bzw. den Kipphebel 20 übertragene Drehmoment messen können.

Gibt die Kupplung 47 dagegen in einer später noch näher erläuterten Fahrsituation die Bremsscheibe 42 frei (vorliegend auch als zweiter Zustand der Kupplung 47 bezeichnet), wird dem Planetengetriebe 36 sein Widerlager genommen. Entsprechend kann dann das Planetengetriebe 36 an der Ausgangsseite kein Drehmoment mehr bereitstellen, d. h., die Welle 37 nicht antreiben. Vielmehr dreht sich das Planetengetriebe 36 bzw. sein Gehäuse 38 um die Fahrzeuglängsrichtung x.

Es sei an dieser Stelle angemerkt, dass insbesondere die elektrische Handbremse 35 wie auch die elektrisch betätigte Kupplung 47 jeden anderen geeigneten Aufbau aufweisen kann. Insbesondere ist keine Beschränkung dahingehend gegeben, dass jeweils eine Bremsscheibe verwendet werden muss.

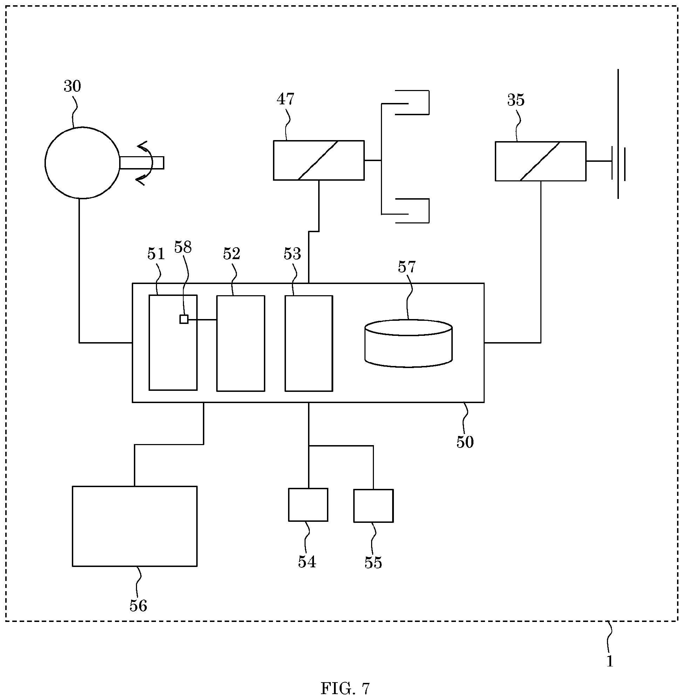

Fig. 7 zeigt einen Schaltplan des Mehrpurfahrzeugs 1. Das Mehrpurfahrzeug 1 umfasst beispielsweise ein zentrales Steuergerät 50. Dieses kann ein oder mehrere Mikroprozessoren sowie geeignete Speichermittel, wie insbesondere RAM, ROM etc. aufweisen.

Das Steuergerät 50 weist drei Steuereinrichtungen, nämlich eine erste Steuereinrichtung 51, eine zweite Steuereinrichtung 52 und eine dritte Steuereinrichtung 53 auf. Die Steuereinrichtungen 51, 52, 53 können hardwaretechnisch oder softwaretechnisch vorgesehen sein.

Das Steuergerät 50 ist weiterhin mit mehreren Sensoren 54, 55 signaltechnisch gekoppelt. Beispielsweise können die Sensoren 54, 55 die Kraftmessdosen 48, 49 aufweisen. Zusätzlich oder alternativ können die Sensoren 54, 55 dazu eingerichtet sein, einen Neigungswinkel ß (siehe Fig. 5) der Tragstruktur 9, insbesondere der Fahrgastzelle 11, um die Fahrzeuglängsrichtung x, einen Lenkwinkel der Räder 2, 3, eine Geschwindigkeit und/oder eine Beschleunigung des Mehrpurfahrzeugs 1 zu erfassen.

Weiter ist eine Benutzerschnittstelle in Form einer Eingabeeinrichtung 56 vorgesehen. Die Benutzerschnittstelle bzw. Eingabeeinrichtung 56 kann beispielsweise als Touchscreen ausgebildet sein. Mittels der Eingabeeinrichtung 56 kann der Fahrer (oder ein anderer Nutzer) Nutzerbefehle eingeben. Die Nutzerbefehle können beispielsweise das Umschalten zwischen einer aktiven und einer passiven Neigetechnik umfassen. Auch andere Befehle werden nachstehend noch näher erläutert.

Weiterhin ist das Steuergerät 50 signaltechnisch mit dem Elektromotor 30, der Handbremse 35 und der Kupplung 47 gekoppelt.

Die Steuereinrichtung 51 ist dazu eingerichtet, den Elektromotor 30 zum Aufbringen eines Drehmoments auf den Kipphebels 20 mittels des Zahnrads 25 anzusteuern. Dieser (erste) Zustand (Drehmoment ungleich 0) entspricht einer aktiven Neigetechnik, wie vorstehend bereits ausgeführt. Ferner ist die Steuereinrichtung 51 dazu eingerichtet, den Elektromotor 30 zum Freigeben des Zahnrads 25 und damit des Kipphebels 20 anzusteuern. Dieser zweite Zustand (Drehmoment gleich 0) entspricht einer passiven Neigetechnik, wie ebenfalls vorstehend bereits ausgeführt.

Auslöser für das Umschalten zwischen der passiven und aktiven Neigetechnik können unterschiedliche Ereignisse sein:
Zum einen kann die Steuereinrichtung 51 den Elektromotor 30 zum Aufbringen des Drehmoments (aktive Neigetechnik) dann ansteuern, wenn von den Sensoren 54, 55 erfasste Messgrößen einen vorbestimmten Schwellwert über- oder unterschreiten. Insbesondere kann das Steuergerät 50 einen Datenspeicher 57 aufweisen, in welchem kritische Fahrzustände in Form von Schwellwerten hinterlegt sind. Die Steuereinrichtung 51 vergleicht während der Fahrt fortwährend beispielsweise den Neigungswinkel β und eine Drehbeschleunigung β" (zweite Ableitung des Neigungswinkels β nach der Zeit) um die Fahrzeuglängsachse x mit diesen Schwellwerten. Überschreiten diese beispielsweise die Schwellwerte, so greift die Steuereinrichtung 51 mithilfe des Elektromotors 30 in die Kurvenfahrt ein (aktive Neigetechnik) und kann somit Unfälle vermeiden.

Zusätzlich oder alternativ kann vorgesehen sein, dass der Fahrer oder ein sonstiger Nutzer mittels der Eingabeeinrichtung 56, beispielsweise durch Drücken eines Kopfes, der Steuereinrichtung 51 befiehlt, zwischen der passiven und der aktiven Neigetechnik umzuschalten. Wünscht der Fahrer also beispielsweise eine bequemere Fahrt, so unterstützt ihn die Steuereinrichtung 51 in Kurven etc.

Aus Gründen der Sicherheit empfiehlt es sich, dass stets eine sogenannte mechanische Rückfallebene gegeben ist. Damit ist gemeint, dass dann, wenn die aktive Neigetechnik nicht mehr oder nur noch fehlerhaft funktioniert, automatisch auf die passive Neigetechnik umgeschaltet wird, um Unfälle zu vermeiden. Hierzu ist gemäß dem Ausführungsbeispiel vorgesehen, dass die Steuereinrichtung 52 mit einer Detektoreinrichtung 58 signaltechnisch verbunden ist. Die Detektoreinrichtung 58 ist dazu eingerichtet, einen Fehlerzustand der Steuereinrichtung 51 zu erkennen. Beispielsweise kann die Detektoreinrichtung 58 in einem Abgriff einer Spannung an einem der Steuereinrichtung 51 zugeordneten Mikrochip bestehen. Sobald die Detektoreinrichtung 58 den Fehlerzustand detektiert, schaltet die Steuereinrichtung 52 von der aktiven auf die passive Neigetechnik um. Dies gelingt, indem sie die Kupplung 47 zum Freigeben der Bremsscheibe 42 ansteuert. Im Detail erzeugt die Steuereinrichtung 52 ein Steuersignal, welches den dem Bremssattel 45 zugeordneten Elektromotor (nicht gezeigt) zum Öffnen der Bremsbeläge ansteuert. Dadurch wird ein Drehen des Gehäuses 38 des Planetengetriebes 36 freigegeben, sodass diesem sein Widerlager genommen wird. Wie bereits vorstehend ausgeführt, kann in diesem Fall der Elektromotor 30 kein Drehmoment mehr an dem Zahnrad 25 bereitstellen. Damit besteht dann der Zustand einer passiven Neigetechnik.

Möchte der Fahrer nun das Mehrpurfahrzeug 1 abstellen bzw. parken, so tätigt er eine entsprechende Eingabe an der Eingabeeinrichtung 56. Die Steuereinrichtung 53 steuert sodann die elektrische Handbremse 35 zum Feststellen der Bremsscheibe 33 an. Dadurch ist ein Drehen des Zahnrad 25 gesperrt. Folglich wird ein Verkippen des Kipphebels 20 und damit der Tragstruktur 9 um die Fahrzeuglängsachse x verhindert. Das Mehrpurfahrzeug 1 kann also sicher abgestellt werden. Beim Losfahren betätigte Fahrer wiederum die Eingabeeinrichtung 56, wodurch die elektrische Handbremse 35 entsperrt und die Bremsscheibe 33 freigegeben wird.

Obwohl die vorliegende Erfindung anhand von Ausführungsbeispielen beschrieben wurde, ist sie vielfältig modifizierbar. Die Erfindung ist in den Ansprüchen definiert.

### BEZUGSZEICHENLISTE

- 1: Mehrpurfahrzeug
- 2: Vorderrad
- 3: Vorderrad
- 4: Hinterrad
- 5: Radnarbenmotor
- 6: Fahrspur
- 7: Fahrspur
- 8: Fahrspur
- 9: Tragrahmen
- 10: Rahmen
- 11: Fahrgastzelle
- 12: Fahrersitz
- 13: untere Schwinge
- 14: obere Schwinge
- 15: untere Schwinge
- 16: obere Schwinge
- 17: Lager-Bolzen-Verbindung
- 18: Achsschenkel
- 19: Lenkgestänge
- 20: Kipphebel
- 21: Grundform
- 22: Winkeleck
- 23: Bogenform
- 24: gezahnter Abschnitt
- 25: Zahnrad
- 26: Arm
- 27: Arm
- 28: Feder-Dämpfer-Element
- 29: Feder-Dämpfer-Element
- 30: Elektromotor
- 31: Riemenantrieb
- 32: Welle
- 33: Bremsscheibe
- 34: Bremssattel
- 35: elektrische Handbremse
- 36: Planetengetriebe
- 37: Welle
- 38: Gehäuse
- 39: Lager
- 40: Lager
- 40a: Lager
- 40b: Lager
- 41: Ring
- 42: Bremsscheiben
- 43: Ring
- 44: Arm
- 45: Bremssattel
- 46: Elektromotor
- 47: Kupplung
- 48: Kraftmessdose
- 49: Kraftmessdose
- 50: Steuergerät
- 51: Steuereinrichtung
- 52: Steuereinrichtung
- 53: Steuereinrichtung
- 54: Sensor
- 55: Sensor
- 56: Eingabeeinrichtung
- 57: Datenspeicher
- 58: Detektoreinrichtung
- A: Abstand
- x: Fahrzeuglängsrichtung
- y: Fahrzeugbreitenrichtung
- z: Fahrzeughochrichtung
- α: Winkel
- β: Winkel
- β": Winkelbeschleunigung

## Patentansprüche

1. Mehrspurfahrzeug (1), insbesondere drei- oder mehrrädriges Mikromobil, mit
einer Tragstruktur (9), welche sich in der Fahrzeuglängsrichtung (x) erstreckt,
einem ersten Rad (2), welches eine erste Fahrspur (6) vorgibt,
einem zweiten Rad (3), welches eine zweite Fahrspur (7) vorgibt, die in einer Fahrzeugbreitenrichtung (y) von der ersten Fahrspur (6) beabstandet (A) ist,
einer ersten Schwinge (15), welche das erste Rad (2) an der Tragstruktur (9) schwenkbar anlenkt,
einer zweiten Schwinge (13), welche das zweite Rad (3) an der Tragstruktur (9) schwenkbar anlenkt,
einem Hebel (20), welcher an der Tragstruktur (9) schwenkbar angelenkt ist und die erste und zweite Schwinge (15, 13) mechanisch koppelt,
einem Aktor (30), welcher dazu eingerichtet ist, wahlweise:
ein Drehmoment auf den Hebel (20) aufzubringen, um dadurch die Tragstruktur (9) um die Fahrzeuglängsrichtung (x) zu neigen, oder
eine Schwenkbewegung des Hebels (20) um die Fahrzeuglängsrichtung (x) freizugeben,
eine erste Steuereinrichtung (51), welche dazu eingerichtet ist, den Aktor (30) zum Aufbringen des Drehmoments und zum Freigeben der Schwenkbewegung anzusteuern, und
eine Kupplung (47), welche dazu eingerichtet ist, in einem ersten Zustand derselben den Aktor (30) mit dem Hebel (20) drehfest zu koppeln und in einem zweiten Zustand derselben den Aktor (30) von dem Hebel (20) zu entkoppeln,
**gekennzeichnet durch**
eine Detektoreinrichtung (58), welche dazu eingerichtet ist, einen Fehlerzustand der ersten Steuereinrichtung (51) zu detektieren, und
eine zweite Steuereinrichtung (52), welche dazu eingerichtet ist, die Kupplung (47) von dem ersten in den zweiten Zustand zu schalten, wenn die Detektoreinrichtung (58) den Fehlerzustand detektiert.

2. Mehrspurfahrzeug nach Anspruch 1, wobei der Hebel (20) ein Kipphebel ist.

3. Mehrspurfahrzeug nach Anspruch 1 oder 2, ferner aufweisend ein Zahnrad (25), wobei der Hebel (20) mit einem gezahnten Abschnitt (24) versehen ist, der im Eingriff mit dem Zahnrad (25) steht, und wobei der Aktor (30) dazu eingerichtet ist, das Zahnrad (25) anzutreiben.

4. Mehrspurfahrzeug nach einem der Ansprüche 1 - 3, ferner aufweisend ein erstes Feder-Dämpfer-Element (29), welches an der ersten Schwinge (15) und an dem Hebel (20) schwenkbar angelenkt ist, und ein zweites Feder-Dämpfer-Element (28), welches an der zweiten Schwinge (13) und an dem Hebel (20) schwenkbar angelenkt ist, wobei bevorzugt das erste und zweite Feder-Dämpfer-Element (29, 28) an dem Hebel (20) in der Fahrzeugbreitenrichtung (y) versetzt zueinander angelenkt sind.

5. Mehrspurfahrzeug nach Anspruch 4, ferner aufweisend:
ein oder mehrere Sensoren (54, 55), welche dazu eingerichtet sind, einen Neigungswinkel (β) des Mehrspurfahrzeugs (1) um die Fahrzeuglängsachse (x), einen Lenkwinkel des ersten und/oder zweiten Rads (2, 3), eine Geschwindigkeit und/oder eine Beschleunigung (β") des Mehrspurfahrzeugs (1) zu erfassen,
wobei die erste Steuereinrichtung (51) dazu eingerichtet ist, den Aktor (30) in Abhängigkeit von der oder der jeweils erfassten Größe zum Aufbringen des Drehmoments und zum Freigeben der Schwenkbewegung anzusteuern,
und/oder
eine Eingabeeinrichtung (56) zur Eingabe eines Nutzerbefehls,
wobei die erste Steuereinrichtung (51) dazu eingerichtet ist, den Aktor (30) in Abhängigkeit des Nutzerbefehls zum Aufbringen des Drehmoments und zum Freigeben der Schwenkbewegung anzusteuern.

6. Mehrspurfahrzeug nach Anspruch 4 oder 5, wobei die erste Steuereinrichtung (51) dazu eingerichtet ist, einen kritischen Fahrzustand des Mehrspurfahrzeugs (1) festzustellen und, wenn ein solcher festgestellt wird, den Aktor (30) zum Aufbringen des Drehmoments auf den Hebel (20) anzusteuern.

7. Mehrspurfahrzeug nach Anspruch 6, wobei die erste Steuereinrichtung (51) dazu eingerichtet ist, den kritischen Fahrzustand des Mehrspurfahrzeugs (1) in Abhängigkeit von der oder den jeweils erfassten Größen festzustellen.

8. Mehrspurfahrzeug nach Anspruch 6 oder 7, ferner aufweisend:
ein Getriebe (36), welches dazu eingerichtet ist, eine Bewegung des Aktors (30) auf den Hebel (20) zu übertragen,
wobei die Kupplung (47) dazu eingerichtet ist, in dem ersten Zustand ein Widerlager des Getriebes (36) mit der Tragstruktur (9) drehfest zu verbinden und in einem zweiten Zustand von dieser zu entkoppeln.

9. Mehrspurfahrzeug nach Anspruch 8, wobei die Kupplung (47) aufweist:
eine Bremsscheibe (42), welche mit dem Widerlager des Getriebes (36) verbunden ist, und
eine Bremse (45), welche mit der Tragstruktur (9) verbunden ist,
wobei die Bremse (45) dazu eingerichtet ist, in dem ersten Zustand die Bremsscheibe (42) festzuklemmen und in dem zweiten Zustand freizugeben.

10. Mehrspurfahrzeug nach Anspruch 8 oder 9, wobei das Widerlager durch ein Gehäuse (38) des Getriebes (36) gebildet ist.

11. Mehrspurfahrzeug nach Anspruch 10, wobei die Bremsscheibe (42) mit dem Gehäuse (38) drehfest verbunden ist

12. Mehrspurfahrzeug nach einem der Ansprüche 8 bis 11, wobei die Kupplung (47) einen Arm (44) aufweist, welcher an dem Getriebe (36) drehbar gelagert ist, wobei bevorzugt der Arm (44) die Bremse (45) trägt und/oder wobei die Bremse (45) oder der Arm (44) mithilfe einer oder mehrerer Kraftmessdosen (48, 49) mit der Tragstruktur (9) verbunden ist.

13. Mehrspurfahrzeug nach Anspruch 12, wobei die ein oder mehreren Kraftmessdosen (48, 49) dazu eingerichtet sind, ein von dem Getriebe (36) in dem ersten Zustand der Kupplung (47) übertragenes Drehmoment zu erfassen, und/oder wobei die erste Steuereinrichtung (51) dazu eingerichtet ist, den Aktor (30) in Abhängigkeit von dem erfassten Drehmoment anzusteuern.

14. Mehrspurfahrzeug nach einem der Ansprüche 1 - 13, wobei der Aktor (30) ein Elektromotor ist.

15. Mehrspurfahrzeug nach einem der Ansprüche 1 - 14, ferner aufweisend:
eine Eingabeeinrichtung (56) zur Eingabe eines Nutzerbefehls,
eine Bremse (35), welche dazu eingerichtet ist, ein Verschwenken des Hebels (20) zu blockieren oder freizugeben, und
eine dritten Steuereinrichtung (53), welche dazu eingerichtet ist, die Bremse (35) zum Blockieren oder Freigeben des Hebels (20) in Abhängigkeit eines Nutzerbefehls anzusteuern.

## Claims

1. A multi-lane vehicle (1), in particular three-wheeled or multi-wheeled micro mobile, comprising
a support structure (9), which extends in the vehicle longitudinal direction (x),
a first wheel (2), which defines a first lane (6),
a second wheel (3), which defines a second lane (7) spaced apart (A) from the first lane (6) in a vehicle width direction (y), and
a first rocker arm (15), which pivotably links the first wheel (2) to the support structure (9),
a second rocker arm (13), which pivotally links the second wheel (3) to the support structure (9), and
a lever (20), which is pivotally coupled to the support structure (9) and mechanically couples the first and second rocker arms (15, 13),
an actuator (30), which is configured to selectively:
applying a torque to the lever (20) to thereby tilt the support structure (9) about the vehicle longitudinal direction (x), or
releasing a pivoting movement of the lever (20) about the vehicle longitudinal direction (x),
a first control device (51), which is configured to control the actuator (30) for applying the torque and for releasing the pivoting movement, and
a coupling (47), which is configured to couple the actuator (30) to the lever (20) in a rotationally fixed manner in a first state thereof and to decouple the actuator (30) from the lever (20) in a second state thereof,
**characterized by**
a detector device (58), which is configured to detect a fault state of the first control device (51), and
second control device (52), which is configured to switch the clutch (47) from the first to the second state when the detector device (58) detects the fault state.

2. The multi-lane vehicle according to claim 1, wherein the lever (20) is a rocker arm.

3. The multi-lane vehicle according to claim 1 or 2, further comprising a gear (25), wherein the lever (20) is provided with a toothed portion (24) engaging the gear (25), and wherein the actuator (30) is configured to drive the gear (25).

4. The multi-lane vehicle according to any one of claims 1 - 3, further comprising a first spring-damper element (29), which is pivotally hinged to the first rocker arm (15) and to the lever (20), and a second spring-damper element (28), which is pivotally hinged to the second rocker arm (13) and to the lever (20), wherein preferably the first and second spring-damper elements (29, 28) are hinged to the lever (20) offset from each other in the vehicle width direction (y).

5. The multi-lane vehicle of claim 4, further comprising:
one or more sensors (54, 55), which are configured to detect an inclination angle (β) of the multi-lane vehicle (1) about the vehicle longitudinal axis (x), a steering angle of the first and/or second wheel (2, 3), a speed and/or an acceleration (β") of the multi-lane vehicle (1),
wherein the first control device (51) is configured to control the actuator (30) as a function of the or the respectively sensed variable for applying the torque and for releasing the pivoting movement,
and/or
an input device (56) for inputting a user command,
wherein the first control device (51) is configured to control the actuator (30) as a function of the user command for applying the torque and for releasing the pivoting movement.

6. The multi-lane vehicle according to claim 4 or 5, wherein the first control device (51) is configured to determine a critical driving state of the multi-lane vehicle (1) and, if such is determined, to control the actuator (30) to apply the torque to the lever (20).

7. The multi-lane vehicle according to claim 6, wherein the first control device (51) is configured to determine the critical driving state of the multi-lane vehicle (1) as a function of the respective detected variable or variables.

8. The multi-lane vehicle according to claim 6 or 7, further comprising:
a transmission (36), which is configured to transmit a movement of the actuator (30) to the lever (20),
wherein the coupling (47) is configured to rotationally connect an abutment of the transmission (36) to the support structure (9) in the first state and to decouple the abutment from the support structure in a second state.

9. The multi-lane vehicle according to claim 8, wherein the coupling (47) comprises:
a brake disc (42), which is connected to the abutment of the transmission (36), and
a brake (45), which is connected to the support structure (9),
wherein the brake (45) is configured to clamp the brake disc (42) in the first state and release the brake disc (42) in the second state.

10. The multi-lane vehicle according to claim 8 or 9, wherein the abutment is formed by a housing (38) of the transmission (36).

11. The multi-lane vehicle according to claim 10, wherein the brake disc (42) is connected to the housing (38) in a rotationally fixed manner

12. The multi-lane vehicle according to any one of claims 8 to 11, wherein the coupling (47) comprises an arm (44), which is rotatably mounted on the transmission (36), preferably wherein the arm (44) carries the brake (45) and/or wherein the brake (45) or the arm (44) is connected to the support structure (9) by means of one or more load cells (48, 49).

13. The multi-lane vehicle according to claim 12, wherein the one or more load cells (48, 49) are configured to detect a torque transmitted by the transmission (36) in the first state of the coupling (47), and/or wherein the first control device (51) is arranged to control the actuator (30) as a function of the detected torque.

14. The multi-lane vehicle according to any one of claims 1 - 13, wherein the actuator (30) is an electric motor.

15. The multi-lane vehicle according to any one of claims 1 - 14, further comprising:
an input device (56) for inputting a user command,
a brake (35), which is configured to block or release pivoting of the lever (20), and
third control device (53), which is configured to control the brake (35) for blocking or releasing the lever (20) as a function of a user command.

## Revendications

1. Véhicule multivoie (1), en particulier un micromobile à trois roues ou à plusieurs roues, comprenant
une structure de support (9) s'étendant dans la direction longitudinale (x) du véhicule,
une première roue (2) qui définit une première voie (6),
une deuxième roue (3) qui définit une deuxième voie (7) espacée (A) de la première voie (6) dans une direction de largeur (y) du véhicule,
un premier bras oscillant (15) qui relie de manière pivotante la première roue (2) à la structure de support (9),
un deuxième bras oscillant (13) qui relie de manière pivotante la deuxième roue (3) à la structure de support (9),
un levier (20) relié de manière pivotante à la structure de support (9) et couplant mécaniquement le premier et le deuxième bras oscillant (15, 13),
un actionneur (30) configuré pour sélectivement :
appliquer un couple au levier (20) pour incliner ainsi la structure de support (9) autour de la direction longitudinale (x) du véhicule, ou
libérer un mouvement de pivotement du levier (20) autour de la direction longitudinale (x) du véhicule,
un premier dispositif de commande (51) configuré pour commander l'actionneur (30) pour appliquer le couple et pour libérer le mouvement de pivotement, et
un embrayage (47) configuré pour coupler l'actionneur (30) au levier (20) de manière fixe en rotation dans un premier état de celui-ci et pour désaccoupler l'actionneur (30) du levier (20) dans un deuxième état de celui-ci,
**caractérisé par**
un dispositif de détection (58) configuré pour détecter un état de défaut du premier dispositif de commande (51), et
un deuxième dispositif de commande (52) configuré pour faire passer l'embrayage (47) du premier au deuxième état lorsque le dispositif de détection (58) détecte l'état de défaut.

2. Véhicule multivoie selon la revendication 1, dans lequel le levier (20) est un levier basculant.

3. Véhicule multivoie selon la revendication 1 ou 2, comprenant en outre un engrenage (25), dans lequel le levier (20) est pourvu d'une partie dentée (24) engagée avec l'engrenage (25), et dans lequel l'actionneur (30) est configuré pour entraîner l'engrenage (25).

4. Véhicule multivoie selon l'une quelconque des revendications 1 à 3, comprenant en outre un premier élément amortisseur à ressort (29) articulé de manière pivotante sur le premier bras oscillant (15) et sur le levier (20), et un deuxième élément amortisseur à ressort (28) articulé de manière pivotante sur le deuxième bras oscillant (13) et sur le levier (20), de préférence le premier et le deuxième élément amortisseur à ressort (29, 28) étant articulés sur le levier (20) de manière décalée l'un par rapport à l'autre dans la direction de la largeur (y) du véhicule.

5. Véhicule multivoie selon la revendication 4, comprenant en outre :
un ou plusieurs capteurs (54, 55) configurés pour détecter un angle d'inclinaison (β) du véhicule multivoie (1) autour de l'axe longitudinal (x) du véhicule, un angle de braquage de la première et/ou de la deuxième roue (2, 3), une vitesse et/ou une accélération (β") du véhicule multivoie (1),
le premier dispositif de commande (51) étant configuré pour activer l'actionneur (30) en fonction de la ou de chaque valeur détectée afin d'appliquer le couple et de permettre le mouvement de pivotement,
et/ou
un dispositif d'entrée (56) pour entrer une commande utilisateur,
dans lequel le premier dispositif de commande (51) est configuré pour commander l'actionneur (30) en fonction de la commande de l'utilisateur pour appliquer le couple et libérer le mouvement de pivotement.

6. Véhicule multivoie selon la revendication 4 ou 5, dans lequel le premier dispositif de commande (51) est configuré pour détecter une condition de conduite critique du véhicule multivoie (1) et, lorsqu'une telle condition est détectée, pour commander l'actionneur (30) pour appliquer le couple au levier (20).

7. Véhicule multivoie selon la revendication 6, dans lequel le premier dispositif de commande (51) est configuré pour déterminer l'état de conduite critique du véhicule multivoie (1) en fonction de la ou des valeurs détectées respectives.

8. Véhicule multivoie selon la revendication 6 ou 7, comprenant en outre :
une transmission (36) configurée pour transmettre le mouvement de l'actionneur (30) au levier (20),
dans lequel l'embrayage (47) est configuré pour connecter de manière rotative une butée de la transmission (36) à la structure de support (9) dans le premier état et pour découpler la butée de la structure de support dans un deuxième état.

9. Véhicule multivoie selon la revendication 8, dans lequel l'embrayage (47) comprend :
un disque de frein (42) relié à la butée de la transmission (36), et
un frein (45) relié à la structure de support (9),
dans lequel le frein (45) est configuré pour serrer le disque de frein (42) dans le premier état et libérer le disque de frein (42) dans le deuxième état.

10. Véhicule multivoie selon la revendication 8 ou 9, dans lequel la butée est formée par un boîtier (38) de la transmission (36).

11. Véhicule multivoie selon la revendication 10, dans lequel le disque de frein (42) est relié au boîtier (38) de manière fixe en rotation.

12. Véhicule multivoie selon l'une quelconque des revendications 8 à 11, dans lequel l'embrayage (47) comprend un bras (44) monté de manière rotative sur la transmission (36), de préférence dans lequel le bras (44) porte le frein (45) et/ou dans lequel le frein (45) ou le bras (44) est relié à la structure de support (9) au moyen d'une ou plusieurs cellules de charge (48, 49).

13. Véhicule multivoie selon la revendication 12, dans lequel la ou les cellules de charge (48, 49) sont configurées pour détecter un couple transmis par la transmission (36) dans le premier état de l'embrayage (47), et/ou dans lequel le premier dispositif de commande (51) est configuré pour commander l'actionneur (30) en fonction du couple détecté.

14. Véhicule multivoie selon l'une quelconque des revendications 1 - 13, dans lequel l'actionneur (30) est un moteur électrique.

15. Véhicule multivoie selon l'une quelconque des revendications 1 à 14, comprenant en outre :
un dispositif d'entrée (56) pour entrer une commande utilisateur,
un frein (35) configuré pour bloquer ou libérer le pivotement du levier (20), et
un troisième dispositif de commande (53) configuré pour commander le frein (35) pour bloquer ou libérer le levier (20) en réponse à une commande de l'utilisateur.
